# EUROPÄISCHE PATENTSCHRIFT

(11) **EP 3 150 070 B1**
(45) Veröffentlichungstag und Bekanntmachung des Hinweises auf die Patenterteilung: **12.02.2020**
(21) Anmeldenummer: 15187678.6
(22) Anmeldetag: 30.09.2015
(51) Int. Cl.: A21B 3/13, A21C 11/02, A21C 11/12

(54) **PRÄGEFORM ZUMINDEST ZUR ABSCHNITTSWEISEN FORMGEBUNG EINER BACKWARE, VERFAHREN ZUR HERSTELLUNG EINER SOLCHEN BACKWARE UND BACKWARE**
MOLD FOR SHAPING AT LEAST A SECTION OF A BAKERY PRODUCT, METHOD FOR PRODUCING SUCH A BAKERY PRODUCT AND BAKERY PRODUCT
MATRICE AU MOINS DESTINEE A FAÇONNER PARTIELLEMENT UN PRODUIT DE BOULANGERIE, PROCEDE DE FABRICATION D'UN TEL PRODUIT DE BOULANGERIE ET PRODUIT DE BOULANGERIE

(43) Veröffentlichungstag der Anmeldung: 05.04.2017
(73) Patentinhaber: Leisner, Anna Sarah, 99084 Erfurt (DE)
(72) Erfinder: Leisner, Anna Sarah, 99084 Erfurt (DE)
(74) Vertreter: Finger, Catrin

(56) Entgegenhaltungen:
- DE-A1- 2 633 350
- DE-C- 156 503
- DE-U1- 29 717 612
- DE-U1-202012 006 088
- FR-A- 671 332
- US-A1- 2008 241 326
- Julia Kuhn ET AL: "Testbericht baekka Silikonbackformen", Blog: ein bisschen JuNi, 9 July 2013 (2013-07-09), pages 1-5, XP055408527, Retrieved from the Internet: URL:http://juni-lifestyle.blogspot.de/2013 /07/ju-vs-ni-testbericht-baekka.html [retrieved on 2017-09-21]
- Anonymous: "Lurch - Flexi Form Shopping Queen - Keksstempel-Set 6teilig", , 18 June 2009 (2009-06-18), pages 1-2, XP055408544, Retrieved from the Internet: URL:http://www.culinaris.eu/Lurch-FlexiFor m-Shopping-Queen-Keksstempel-Set-6teilig [retrieved on 2017-09-21]

## Beschreibung

Die Erfindung betrifft ein Verfahren zur Herstellung einer Backware mit einer Prägeform.

Aus der EP 1 477 066 A1 ist ein Verfahren zum Markieren von Backwaren, insbesondere von Brötchen oder Brot mit einem Kennzeichen in Form eines Buchstabens und/oder einer Grafik bekannt. Das Verfahren sieht vor, dass auf die Außenfläche des Teiges vor seinem Backen ein Stempel aufgedrückt wird, dessen das Kennzeichen bildende Stempelfläche auf eine solch hohe Temperatur erwärmt wird, dass die Teigoberfläche an den Berührungsstellen in der Teigstruktur verändert, insbesondere angebacken wird.

Darüber hinaus ist das sogenannte Stüpfeln als Formgebung eines Teiglings mittels eines Stempels oder einer Spezialmaschine bekannt. Der Teigling wird nach einem Rundschleifen mit einem Stempel, dem Stüpfler, tief eingedrückt. An diesen eingedrückten Stellen reißt der Teigling dann beim Backen auf. Eine solche mittels Stüpfeln geformte Backware ist beispielsweise das allgemein bekannte Kaiserbrötchen.

Aus DE 20 2012 006 088 U1 ist eine Backware aus einem Gärteig mit einer rinnenförmigen Vertiefung bekannt.

Aus DE 156 503 C ist eine Stanze zur Herstellung durchbrochener Teigblätter bekannt.

Aus DE 297 17 612 U1 ist eine Vorrichtung zum Ausstanzen von Kuchenteig bekannt.

Aus FR 671 332 A ist eine Vorrichtung zum Aufbringen einer Werbebotschaft auf ein Backerzeugnis bekannt.

Aus US 2008/0241326 A1 sind eine Vorrichtung und ein Verfahren zum Brotschneiden bekannt.

Aus DE 26 33 350 A1 ist eine Backform zur Herstellung von Kuchen bekannt. Der Erfindung liegt die Aufgabe zugrunde, ein Verfahren zur Herstellung einer Backware mit einer Prägeform und eine Backware anzugeben.

Die Aufgabe wird erfindungsgemäß durch die in Anspruch 1 angegebenen Merkmale gelöst.

Vorteilhafte Ausgestaltungen der Erfindung sind Gegenstand der Unteransprüche. Eine Prägeform zumindest zur abschnittsweisen Formgebung für eine Backware umfasst zumindest ein Prägeprofil zum Anordnen auf einem Teigling der herzustellenden Backware, wobei die Prägeform während eines Backvorganges auf dem Teigling verbleibt.

Da die Prägeform über den gesamten Zeitraum des Backvorganges an dem Teigling verbleibt, kann sichergestellt werden, dass die hergestellte Backware mittels der Prägeform geformt ist und somit eine gewünschte Form aufweist. Beispielsweise ist es mittels der zumindest einen Prägeform möglich, die Backware mit einem Logo und/oder einem Muster zur Kennzeichnung der Backware zu versehen.

Mittels der Prägeform ist eine Oberfläche der Backware formbar, ohne dass die Oberfläche aufreißt.

In einer Ausbildung weist die zumindest eine Prägeform zur Formgebung ein zumindest in Abhängigkeit von Abmessungen und/oder Eigenschaften des Teiglings gewähltes Gewicht auf.

Dadurch, dass die Prägeform das in Abhängigkeit von Abmessungen und/oder Eigenschaften des Teiglings gewählte Gewicht aufweist, ist das Risiko eines Aufreißens des Teiges bei dem Backvorgang weitestgehend vermieden.

Zudem ist es mittels der zumindest einen Prägeform möglich, den Teigling mit einem dreidimensionalen Eindruck in der Oberfläche zu versehen, den die fertig gebackene Backware aufweist.

In einer möglichen Ausführungsform ist die zumindest eine Prägeform als ein Prägestempel aus Silikonkautschuk gebildet und kann dadurch wiederverwendet werden.

Ist die zumindest eine Prägeform aus Silikonkautschuk gebildet, ist die zumindest eine Prägeform vergleichsweise flexibel und ist somit an eine Form des Teiglings anpassbar. Dabei ist die Prägeform lebensmittelecht, so dass diese keinerlei geruchliche und/oder geschmackliche Auswirkungen auf die Backware hat.

Des Weiteren benötigt die Prägeform aufgrund der Flexibilität einen vergleichsweise geringen Platzbedarf zum Verstauen derselben, wobei es zudem möglich ist, eine solche Prägeform vergleichsweise einfach zu reinigen.

In einer weiteren Ausführungsform umfasst die zumindest eine Prägeform einen Metallkern, so dass diese Prägeform hinreichend schwer und steif und dadurch formbeständig ausgebildet ist. Zusätzlich kann die Prägeform, insbesondere der Metallkern, plastisch verformbar und dadurch an eine gewünschte Form anpassbar sein.

In einer weiteren möglichen Ausführungsform sind mehrere Prägeformen für mehrere Teiglinge einteilig als ein Prägegitter ausgebildet. Mittels eines solchen Prägegitters ist es vorteilhaft möglich, mehrere Prägeformen auf mehreren Teiglingen gleichzeitig anzuordnen. Dadurch ist es wiederum möglich, gleichzeitig mehrere solcher zumindest abschnittsweise geformten Backwaren herzustellen.

Zudem ist vorgesehen, dass eine Backform eine oder mehrere Aufnahmen umfasst, wobei das Prägegitter derart angeordnet oder fixiert ist, dass ein Prägeprofil des Prägegitters im Bereich einer Aufnahme angeordnet ist.

Mittels einer solchen Backform mit mehreren Aufnahmen und eines solchen Prägegitters kann die Herstellung einer vergleichsweise großen Anzahl solcher Backwaren optimiert werden.

In einer Ausbildung weist die zumindest eine Prägeform ein Prägeprofil, zum Beispiel in Form eines Schriftzugs und/oder einer Grafik, auf, die auf den Teigling aufbringbar ist, so dass die Backware den Schriftzug und/oder die Grafik als dreidimensionale Prägung aufweist. Das Prägeprofil ist beispielsweise eine Ausstanzung, Ausfräsung oder Ausformung in der Prägeform.

Erfindungsgemäß ist die Prägeform bis zu mindestens einem Temperaturwert von 350°C formbeständig, so dass es möglich ist, verschiedene Backwaren, die zur Herstellung unterschiedliche Backtemperaturen erfordern, mittels der Backform zu backen.

Dabei betrifft die Erfindung ein Verfahren zur Herstellung einer Backware mit einer Prägeform, wobei die zumindest eine Prägeform auf einem Teigling angeordnet und in diesen eingedrückt wird, wobei der Teigling mit der Prägeform gebacken wird und die Prägeform nach einer vorgegebenen Zeitdauer nach dem Backvorgang von der Backware entfernt wird.

Durch das Verfahren ist es möglich, die Backware mit einer dreidimensionalen Form, insbesondere einer Prägung zu versehen, beispielsweise um die Backware mit einem Firmennamen zu kennzeichnen.

Dazu wird die Prägeform in einer Weiterbildung des Verfahrens mit einem vorgegebenen Druck in den Teigling eingedrückt.

Mittels des Druckes wird eine Tiefe der Prägung, beispielsweise die Tiefe eines Musters oder eines Schriftzuges, in die Backware vorgegeben.

Eine Backware, welche mittels einer oben beschriebenen Backform und nach einem solchen oben beschriebenen Verfahren hergestellt ist, weist eine Prägung, beispielsweise in Form eines Schriftzuges, eines Musters und/oder eines Logos, auf.

Ausführungsbeispiele der Erfindung werden im Folgenden anhand von Zeichnungen näher erläutert.

Darin zeigen:
- Figur 1: schematisch eine perspektivische Ansicht einer Prägeform in einer ersten Ausführungsform,
- Figur 2: schematisch eine Prägeform in einer zweiten Ausführungsform,
- Figur 3: schematisch eine Backform mit Aufnahmen und Prägegitter,
- Figur 4: schematisch ein Backblech mit mehreren Prägeformen, und
- Figur 5: schematisch eine Backware mit einer Prägung.

Einander entsprechende Teile sind in allen Figuren mit den gleichen Bezugszeichen versehen.

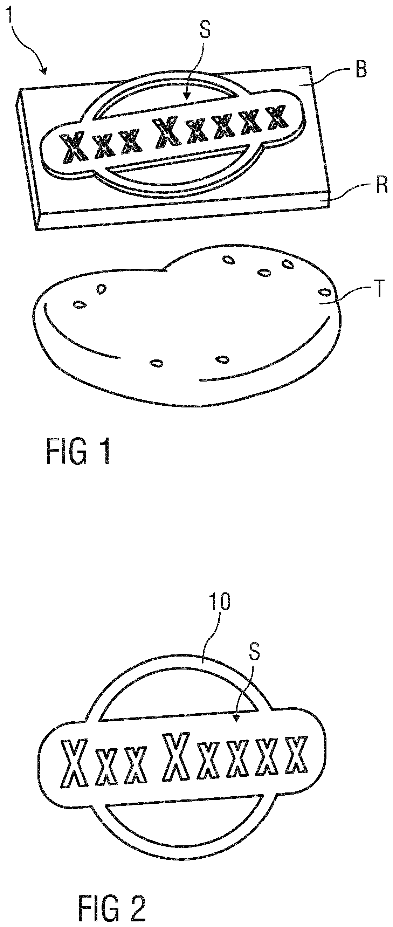

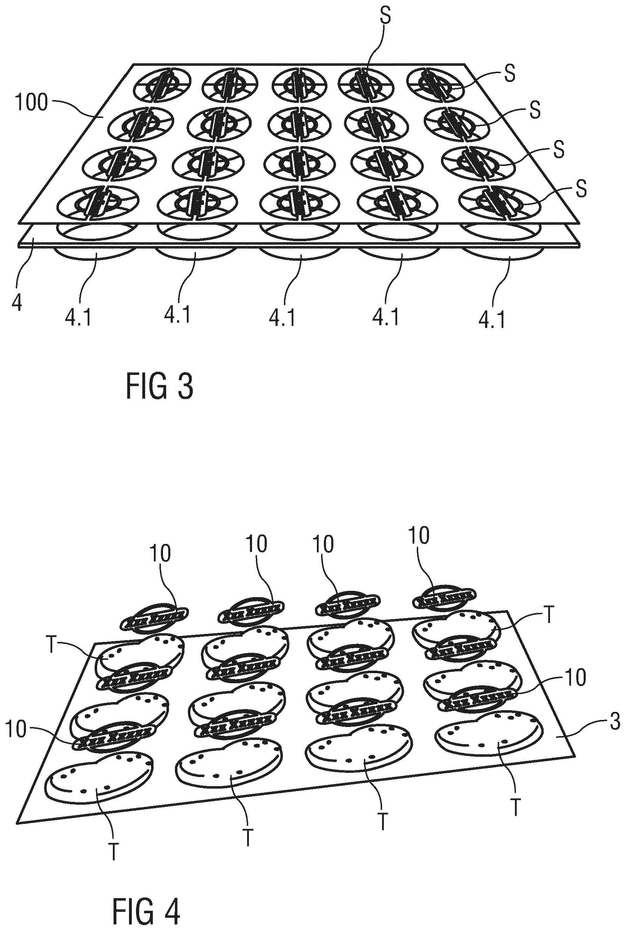

**Figur 1** zeigt eine perspektivische Ansicht einer Prägeform 1 in einer ersten Ausführungsform zumindest zur abschnittsweisen Formgebung für eine in Figur 4 beispielhaft dargestellte Backware 2.

Die Prägeform 1 ist aus einem lebensmittelechten, flexiblen Material wie Silikonkautschuk, platinversetztem Silikon oder Silikon gebildet.

Beispielsweise wird die Prägeform 1 zugeschnitten, in Form gegossen oder gepresst oder anderweitig hergestellt.

In einer Alternative kann die Prägeform 1 aus einem Metall gebildet sein, welches anschließend mit Silikon oder einem anderen als Backform geeigneten Material ummantelt wird. Dabei bildet das Metall einen Metallkern der Prägeform 1.

Die Prägeform 1 in der ersten Ausführungsform umfasst einen Boden B und einen diesen umgebenden Rand R. Der Boden B dient dem Aufbringen einer Prägung P, beispielsweise eines Schriftzugs oder eines Logos, auf der zu fertigenden Backware 2. Hierzu ist der Boden B ausgestanzt oder ausgefräst und weist ein Prägeprofil S auf, das der zu erzielenden Prägung P in der Backware 2 entspricht.

Durch das Prägeprofil S im Boden B wird beim Aufdrücken der Prägeform 1 auf einen Teigling T (Rohling der Backware 2) das Prägeprofil S in den Teigling T eingedrückt, wodurch dann die Prägung P auf der zu fertigenden Backware 2 mit einer entsprechenden Eindringtiefe und scharfen Prägekontur entsteht. Bei dem Teigling T handelt es sich um einen formstabilen und festen Teig, der hefegeführt oder nicht hefegeführt sein kann.

Ein zweites Ausführungsbeispiel einer Prägeform 10 ist in **Figur 2** näher gezeigt.

In der zweiten Ausführungsform ist die Prägeform 10 als ein Stempel, insbesondere ein Prägestempel, ausgebildet. Die Prägeform 10 umfasst das Prägeprofil S, das tiefer in den zu backenden Teigling T eingedrückt wird als die Oberfläche des Teiglings T selbst.

**Figur 3** zeigt eine weitere Ausführungsform einer Prägeform 100 zur gleichzeitigen Herstellung mehrerer Prägungen P auf mehreren Backwaren 2. Hierzu ist eine Backform 4 vorgesehen, die mehrere Aufnahmen 4.1 zur Aufnahme von Teiglingen T aufweist.

Die Prägeform 100 ist als ein Prägegitter mit einer Mehrzahl von Prägeprofilen S ausgebildet. Die Prägeform 100 weist dabei eine der Anzahl von Aufnahmen 4.1 entsprechende Anzahl von Prägeprofilen S auf.

Das Prägegitter ist zur Formgebung für mehrere Backwaren 2 vorgesehen. Das Prägegitter weist zwanzig Prägeprofile S auf, so dass mittels des Prägegitters zwanzig Backwaren 2 mit einer entsprechenden Prägung P versehen werden können.

Dabei können die Prägeform 100 und somit das Prägegitter mit den Prägeprofilen S und die Backform 4 einteilig ausgebildet sein. Alternativ kann das Prägegitter an der Backform 4 fixiert sein, beispielsweise schwenkbar an dieser befestigt sein.

Wiederum alternativ dazu können die Backform 4 und das Prägegitter separate Teile sein, wobei das Prägegitter nach einem Befüllen der Aufnahmen 4.1 mit den Teiglingen T auf der Backform 4, insbesondere plan anordbar ist und vorzugsweise gegenüber einem Verrutschen gehalten ist.

**Figur 4** zeigt in Explosionsdarstellung ein Backblech 3, auf welchem verteilt Teiglinge T der herzustellenden Backware 2 angeordnet sind. Zur Herstellung einer tiefen und konturscharfen Prägung P in der Backware 2 werden eine Vielzahl von Prägeformen 1 oder 10 der ersten bzw. zweiten Ausführungsform auf die Teiglinge T gelegt und in diese eingedrückt. Dabei verbleiben die einzelnen stempelförmigen Prägeformen 1 oder 10 auf den Teiglingen T während des Backvorgangs. Vor dem Auflegen der Prägeformen 1 oder 10 auf die Teiglinge T können diese optional befeuchtet werden.

In Abhängigkeit der Form und Größe der herzustellenden Backware 2 weist zumindest die Prägeform 1, 10 oder 100 ein von Abmessungen und Eigenschaften des Teiglings T, aus dem die Backware 2 hergestellt wird, abhängiges Gewicht auf.

Die Prägeform 1, 10 oder 100 darf zum einen nicht zu schwer sein, damit beispielsweise ein Garvorgang, insbesondere bei einem Hefeteig, und ein Backvorgang derart durchführbar sind, dass der Teigling T seine endgültige Form und Größe erlangt und behält.

Zum anderen darf die Prägeform 1, 10 oder 100 nicht zu leicht sein, so dass das Risiko eines Verrutschens oder Abrutschens der Prägeform 1, 10 oder 100 von dem Teigling T zumindest verringert ist.

Zudem kann die Prägeform 1, 10 oder 100 in Abhängigkeit einer Beschaffenheit des Backteiges und damit des Teiglings T zur Herstellung der Backware 2 elastisch oder weniger elastisch und hinreichend schwer ausgebildet sein.

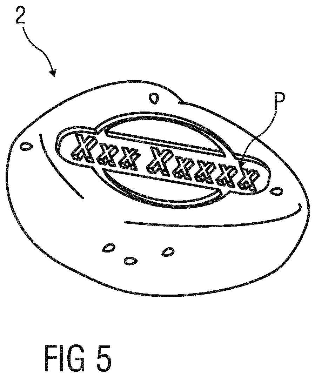

Zur Herstellung der in **Figur 5** gezeigten Backware 2, welche ein Brötchen sein kann, ist vorgesehen, den Backteig für den Teigling T nach vorliegendem Rezept herzustellen.

Der Backteig wird zu dem Teigling T geformt, der im Wesentlichen eine endgültige Form der Backware 2 aufweist. Der Backteig ist insbesondere ein Knet- und Hefeteig und hinreichend fest und formbar sowie formstabil, so dass einzelne Teiglinge T in einer im Wesentlichen der Endform der Backware 2 entsprechenden Form vorgeformt werden können.

Die Prägeform 1, 10 oder 100 wird auf den Teigling T aufgelegt, oder alternativ an einer anderen Stelle des Teiglings T angeordnet und in Abhängigkeit der Beschaffenheit des Backteiges und der Prägeform 1, 10 oder 100 mit einem vorgegebenen Druck in den Teigling T eingedrückt. Zudem wird die Prägeform 1, 10 oder 100 zur Formgebung und Erstellung der konturscharfen Prägung P in der Backware 2 um eine vorgegebene Tiefe in den Teigling T eingedrückt.

Die Prägeform 1, 10 oder 100 verbleibt auf und/oder an dem Teigling T und durchläuft bei einem Hefeteig als Backteig einen Garvorgang und anschließend den Backvorgang.

In einer alternativen Ausführungsform kann die Prägeform 1, 10 oder 100 auch nach dem Garvorgang zeitlich kurz vor dem Backvorgang auf und/oder an dem Teigling T angeordnet werden.

Wird die Prägeform 1, 10 oder 100 nach dem Garvorgang auf und/oder an dem Teigling T angeordnet, kann eine Oberfläche des Teiglings T optional befeuchtet werden, wodurch der Backvorgang des Teiglings T mit der Prägeform 1, 10 oder 100 günstig beeinflusst werden kann. Das Befeuchten sollte vorsichtig und sachgemäß durchgeführt werden, so dass der gegarte Backteig nicht beeinträchtigt oder zerstört wird.

Nach dem Garvorgang wird der Teigling T mit der Prägeform 1, 10 oder 100 gebacken, wobei die Prägeform 1, 10 oder 100 eine vorgegebene Zeitdauer nach dem Backvorgang, insbesondere nach einem teilweisen Abkühlen, verhältnismäßig vorsichtig von der hergestellten Backware 2 entfernt wird.

Wie oben beschrieben, ist die Prägeform 1, 10 oder 100 derart ausgebildet, dass der Backvorgang im Wesentlichen nicht beeinflusst wird, unabhängig davon, ob die Prägeform 1, 10 oder 100 ein Metall als Kern aufweist.

Durch das vor dem Backvorgang stattfindende Eindrücken der Prägeform 1, 10 oder 100 in den Teigling T werden als Prägung P dreidimensionale Oberflächenformen an dem Teigling T ausgebildet, welche die fertig hergestellte Backware 2 ebenfalls aufweist. Nach dem Backvorgang kann sich diese Prägung P, beispielsweise der Schriftzug, nicht mehr verändern.

Handelt es sich bei dem Backteig um einen Hefeteig, wird ein Prozess der Formgebung mittels der Prägeform 1, 10 oder 100 durch den Garvorgang des Backteiges unterstützt.

Mittels der Prägeform 1, 10 oder 100 oder als Bestandteil einer Backform 4 können Prägungen P, beispielsweise Schriftzüge, Muster und/oder Formen auf und/oder an einer Backware 2 erzeugt werden. Insbesondere entsteht durch die Prägung P eine mechanisch veränderte Oberfläche der Backware 2, wobei es möglich ist, Formen weitgehend jeder Art und Größe auf und/oder an der Backware 2 herzustellen.

Beispielsweise kann ein Logo einer Firma, insbesondere einer die Backware 2 herstellenden Backfirma, dreidimensional an der Backware 2 ausgebildet werden.

### BEZUGSZEICHENLISTE

- 1, 10, 100: Prägeform
- 2: Backware
- 3: Backblech
- 4: Backform
- 4.1: Aufnahme

- B: Boden
- P: Prägung
- R: Rand
- S: Prägeprofil
- T: Teigling

## Patentansprüche

1. Verfahren zur Herstellung einer Backware (2) mit einer Backform (4) zumindest zur abschnittsweisen Formgebung einer Backware (2) mit einer Prägeform (1, 10, 100) zumindest zur abschnittsweisen Formgebung einer Backware (2),
wobei zumindest ein Prägeprofil (S) zum Anordnen auf einem Teigling (T) der herzustellenden Backware (2) vorgesehen ist,
wobei die Backform (4) eine oder mehrere Aufnahmen (4.1) umfasst, wobei die Prägeform (1, 10, 100) derart auf der Backform (4) angeordnet oder fixiert ist, dass ein Prägeprofil (S) im Bereich einer Aufnahme (4.1) angeordnet ist, **dadurch gekennzeichnet, dass** die zumindest eine aus Silikonkautschuk, platinversetztem Silikon oder Silikon gebildete und flexible Prägeform (1, 10, 100) auf einem Teigling (T) angeordnet und in diesen eingedrückt wird,
wobei die Prägeform (1, 10, 100) eine Formbeständigkeit bis zu mindestens einem Temperaturwert von 350°C aufweist und
wobei die Prägeform (1, 10, 100) während eines Backvorganges auf dem Teigling (T) verbleibt und nach einer vorgegebenen Zeitdauer nach dem Backvorgang von der Backware (2) entfernt wird,
wobei die Prägeform (1, 10, 100) über den gesamten Zeitraum des Backvorganges auf dem Teigling verbleibt.

2. Verfahren nach Anspruch 1,
**dadurch gekennzeichnet, dass** die Prägeform (1, 10, 100) mit einem vorgegebenen Druck in den Teigling (T) eingedrückt wird.

3. Verfahren nach Anspruch 1 oder 2,
**dadurch gekennzeichnet, dass** die Prägeform (100) ausgebildet ist als ein Prägestempel mit einem einzelnen Prägeprofil (S) oder als ein Prägegitter mit mehreren Prägeprofilen (S).

4. Verfahren nach Anspruch 3,
**dadurch gekennzeichnet, dass** die mehreren Prägeprofile (S) einteilig als ein Prägegitter ausgebildet sind.

5. Verfahren nach einem der vorhergehenden Ansprüche,
**dadurch gekennzeichnet, dass** die Prägeform (1, 10, 100) eine Silikonform aufweist.

6. Verfahren nach Anspruch 5,
**dadurch gekennzeichnet, dass** die Silikonform einen Metallkern aufweist.

7. Verfahren nach einem der vorhergehenden Ansprüche,
**dadurch gekennzeichnet, dass** das Prägeprofil (S) als ein Schriftzug und/oder eine Grafik ausgebildet ist.

## Claims

1. Method for producing a bakery product (2) with a baking pan (4) at least for partially shaping a bakery product (2) using an embossing mould (1, 10, 100) at least for partially shaping a bakery product (2),
wherein at least one embossing profile (S) is provided for arranging on a piece of dough (T) for the bakery product (2) which is to be produced,
wherein the baking pan (4) comprises one or more holders (4.1), wherein the embossing mould (1, 10, 100) is arranged, or fixed, on the baking pan (4) such that an embossing profile (S) is arranged in the region of a holder (4.1),
**characterized in that** the at least one flexible embossing mould (1, 10, 100), which is formed from silicone rubber, platinum-based silicone or silicone, is arranged on a piece of dough (T) and pressed into the same,
wherein the embossing mould (1, 10, 100) exhibits dimensional stability up to at least a temperature of 350°C, and
wherein the embossing mould (1, 10, 100) remains on the piece of dough (T) during a baking process and is removed from the bakery product (2) following a predetermined period of time after the baking process,
wherein the embossing mould (1, 10, 100) remains on the piece of dough throughout the baking process.

2. Method according to Claim 1,
**characterized in that** the embossing mould (1, 10, 100) is pressed into the piece of dough (T) at a predetermined pressure.

3. Method according to Claim 1 or 2,
**characterized in that** the embossing mould (100) is designed in the form of an embossing stamp with a single embossing profile (S) or in the form of an embossing lattice with a plurality of embossing profiles (S).

4. Method according to Claim 3,
**characterized in that** the plurality of embossing profiles (S) are formed in one piece as an embossing lattice.

5. Method according to one of the preceding claims,
**characterized in that** the embossing mould (1, 10, 100) comprises a silicone mould.

6. Method according to Claim 5,
**characterized in that** the silicone mould has a metal core.

7. Method according to one of the preceding claims,
**characterized in that** the embossing profile (S) is designed in the form of a logo and/or a graphic.

## Revendications

1. Procédé de réalisation d'un produit de cuisson (2) à l'aide d'un moule de cuisson (4) destiné à mettre en forme au moins en partie un produit de cuisson (2) avec un moule de gaufrage (1, 10, 100) destiné à mettre en forme au moins en partie un produit de cuisson (2), au moins un profil de gaufrage (S) étant prévu pour être disposé sur un morceau de pâte (T) du produit de cuisson (2) à réaliser, le moule de cuisson (4) comprenant au moins un logement (4.1), le moule de gaufrage (1, 10, 100) étant disposé ou fixé sur le moule de cuisson (4) de façon à disposer un profil de gaufrage (S) dans la région d'un logement (4.1),
**caractérisé en ce que** l'au moins un moule de gaufrage flexible (1, 10, 100), formé à partir de caoutchouc de silicone, de silicone mélangé à du platine ou de silicone, est disposé sur un morceau de pâte (T) et pressé dans celui-ci,
le moule de gaufrage (1, 10, 100) présentant une stabilité de forme jusqu'à au moins une valeur de température de 350 °C et
le moule de gaufrage (1, 10, 100) restant sur le morceau de pâte (T) pendant un processus de cuisson et étant retiré du produit de cuisson (2) au bout d'un intervalle de temps prédéterminé après le processus de cuisson,
le moule de gaufrage (1, 10, 100) restant sur le morceau de pâte pendant toute la durée du processus de cuisson.

2. Procédé selon la revendication 1,
**caractérisé en ce que** le moule de gaufrage (1, 10, 100) est pressé dans le morceau de pâte (T) avec une pression prédéterminée.

3. Procédé selon la revendication 1 ou 2,
**caractérisé en ce que** le moule de gaufrage (100) est conçu comme une empreinte de gaufrage comportant un seul profil de gaufrage (S) ou comme une grille de gaufrage comportant une pluralité de profils de gaufrage (S).

4. Procédé selon la revendication 3,
**caractérisé en ce que** la pluralité de profils de gaufrage (S) sont conçus d'une seule pièce comme une grille de gaufrage.

5. Procédé selon l'une des revendications précédentes,
**caractérisé en ce que** le moule de gaufrage (1, 10, 100) comporte un moule en silicone.

6. Procédé selon la revendication 5,
**caractérisé en ce que** le moule en silicone comporte un noyau métallique.

7. Procédé selon l'une des revendications précédentes,
**caractérisé en ce que** le profil de gaufrage (S) est conçu comme un logo et/ou un graphique.
